# EUROPEAN PATENT APPLICATION

(11) **EP 4 722 908 A1**
(43) Date of publication of application: **08.04.2026**
(21) Application number: 24841955.8
(22) Date of filing: 19.03.2024
(51) Int. Cl.: G06F 9/46

(54) **DATA PROCESSING SYSTEM, DATA PROCESSING METHOD AND RELATED DEVICE**

(30) Priority: 17.07.2023 CN 202310884165
(71) Applicant: Huawei Technologies Co., Ltd., Shenzhen, Guangdong 518129 (CN)
(72) Inventor: CHEN, Xiaoyu, Shenzhen, Guangdong 518129 (CN); ZHAO, Zhijie, Shenzhen, Guangdong 518129 (CN); QUE, Mingjian, Shenzhen, Guangdong 518129 (CN); LU, Jiwei, Shenzhen, Guangdong 518129 (CN)
(74) Representative: Grünecker Patent- und Rechtsanwälte PartG mbB
(86) International application number: PCT/CN2024/082426
(87) International publication number: WO 2025/015953

(57) **Abstract**

This application provides a data processing system. The data processing system includes a first processor, a storage device, and a second processor. The first processor includes a plurality of threads, and each thread corresponds to one data buffer. The first processor is configured to execute the plurality of threads, to separately write a plurality of transaction logs into a plurality of data buffers respectively corresponding to the plurality of threads. The second processor includes a buffer. The second processor is configured to: separately obtain the plurality of transaction logs from the plurality of data buffers, store the plurality of transaction logs to the buffer, and persistently store the plurality of transaction logs from the buffer to the storage device. In this way, in a process of executing the plurality of threads, the first processor does not need to contend for invoking an insert thread, and does not need to execute a process of copying a transaction log, so that the first processor can complete processing of a transaction in a shorter time period. This can effectively improve performance of the data processing system. In addition, this application further provides a corresponding data processing method and a related device.

## Description

This application claims priority to Chinese Patent Application No. 202310884165.9, filed with the China National Intellectual Property Administration on July 17, 2023 and entitled "DATA PROCESSING SYSTEM, DATA PROCESSING METHOD, AND RELATED DEVICE", which is incorporated herein by reference in its entirety.

### TECHNICAL FIELD

This application relates to the field of database technologies, and in particular, to a data processing system, a data processing method, and a related device.

### BACKGROUND

In a data processing system, write-ahead logging (write-ahead logging, WAL) is usually used to ensure atomicity and durability of data operations. Specifically, when data in a database needs to be modified (modifying the data includes adding, deleting, and replacing the data), the data is not directly modified in the database. Instead, a data modification operation is first recorded in a WAL log and the WAL log is persistently stored, and then the data in the database is modified. In this way, if data modification fails due to an error occurred in a data modification process, the data processing system can replay the persistently stored WAL log, to recovery the data modification.

Currently, a processor in the data processing system usually includes a plurality of threads configured to execute transactions (for example, transactions for modifying data), and corresponding transaction logs (Xlogs) are generated in a process of executing the transactions by the threads. Usually, each thread writes a generated transaction log into a data buffer allocated to the thread, and contends with another thread to invoke an insert (insert) thread in the processor to write the transaction log in a buffer area of the thread into a buffer area corresponding to a WAL log, so that the thread continues to execute a next transaction after persistent storage of the transaction log in the buffer area is completed subsequently.

However, the plurality of threads contend for invoking the insert thread in the processor, which increases a delay of executing the transactions by the threads and occupies computing resources of the processor. Consequently, performance of the data processing system is affected.

### SUMMARY

This application provides a data processing system, to improve performance of the data processing system. In addition, this application further provides a data processing method, a computing device, a computer-readable storage medium, and a computer program product.

According to a first aspect, this application provides a data processing system. The data processing system includes a first processor, a storage device, and a second processor. The first processor includes a plurality of threads, each thread corresponds to one data buffer, and the data buffer may be configured to store a transaction log. The first processor is configured to execute the plurality of threads, to separately write a plurality of transaction logs into a plurality of data buffers respectively corresponding to the plurality of threads, and the plurality of transaction logs may be generated when the first processor executes the plurality of threads to process transactions. The second processor includes a buffer. The second processor is configured to: separately obtain the plurality of transaction logs from the plurality of data buffers, store the plurality of transaction logs to the buffer, and persistently store the plurality of transaction logs from the buffer to the storage device.

Because the second processor can actively write the transaction logs in the plurality of data buffers into the buffer configured to generate WAL, in a process of executing the plurality of threads, the first processor does not need to contend for invoking an insert thread in the first processor (where the first processor may not need to create the insert thread either), so that a long delay of executing the plurality of threads by the first processor to process the transactions due to contention for invoking the insert thread can be avoided. Correspondingly, when executing the plurality of threads, the first processor can complete processing of the transactions in a shorter time period, which can effectively reduce occupation of computing resources in the first processor by these threads. In this way, performance of the data processing system can be effectively improved. For example, efficiency of executing the transactions by the data processing system can be improved, and execution of more transactions can be simultaneously supported. In addition, copying and persistent storage of the transaction logs are completed by the second processor, so that the first processor does not need to copy the transaction logs between different buffer areas, and does not need to execute a process of persistently storing the transaction logs, storage resources (specifically, buffer resources that need to be consumed) and computing resources that need to be consumed by the first processor in a process of executing the transactions can be effectively reduced, and performance of the data processing system can be further improved.

In a possible implementation, the second processor includes a smart network interface card or a data processing unit DPU. In this way, the smart network interface card or the DPU is used, a process of copying the transaction logs by the first processor may be offloaded, thereby improving performance of the data processing system.

In a possible implementation, when the second processor persistently stores the plurality of transaction logs from the buffer to the storage device, the second processor may specifically divide the plurality of transaction logs to obtain a plurality of log segments, where each log segment includes at least one transaction log; determine a plurality of first storage areas in the storage device; and write the plurality of log segments into the plurality of first storage areas in parallel, where each first storage area is used to store one log segment. In this way, the second processor writes the plurality of transaction logs in the buffer into the storage device in parallel, so that a persistent storage speed of the transaction logs can be accelerated, a transaction delay can be reduced, and transaction execution efficiency can be improved.

In a possible implementation, the second processor is further configured to: determine a plurality of second storage areas in the storage device; and write metadata separately corresponding to the plurality of log segments into the plurality of second storage areas in parallel, where each second storage area is used to store metadata corresponding to one log segment, and metadata corresponding to each log segment is used to describe a storage location of the log segment in the storage device. In this way, when data recovery needs to be performed based on the transaction log persistently stored in the storage device, the data processing system may check, by using the metadata recorded in the second storage area, whether there is a hole in the transaction log, that is, determine whether a part of transaction logs are missing, so that when determining that no transaction log is missing, the second processor can implement data recovery by replaying the transaction logs recorded in the plurality of first storage areas.

In a possible implementation, after the first processor executes the plurality of threads to separately write the plurality of transaction logs into the plurality of data buffers, the plurality of threads are in a sleep state; and before writing the plurality of log segments into the plurality of first storage areas in parallel, the second processor further records log sequence numbers LSNs respectively corresponding to the plurality of threads; and determines a target LSN, where the target LSN is a maximum LSN for continuously completing persistent storage of a transaction log, so that the second processor can compare a size of an LSN corresponding to a first thread in the plurality of threads and a size of the target LSN; and wake up the first thread when the LSN corresponding to the first thread is not greater than the target LSN. In this way, the second processor can accurately determine an occasion for waking up a thread by comparing an LSN corresponding to the thread with an LSN of a transaction log that has been persistently stored, so that each thread does not need to be woken up until persistent storage of all transaction logs is completed. This can effectively shorten sleep duration of a part of threads, avoid a waste of computing resources of the first processor because the part of threads are in a sleep state for a long time, and improve overall efficiency of executing the plurality of transactions by the first processor by using the threads, so that overall performance of the data processing system can be improved. In addition, the second processor actively wakes up the first thread in the first processor, and the first processor does not need to consume a computing resource to determine whether to change a state of each thread, so that resource consumption of the first processor can be further reduced, and this helps further improve overall performance of the data processing system.

In a possible implementation, a quantity of the plurality of log segments is consistent with a quantity of data write channels supported by the storage device. In this way, based on bottom-layer IO performance of the storage device, a size of an aggregation log may be flexibly configured, that is, the quantity of log segments is configured, so that performance of writing transaction logs into the storage device in parallel by the second processor can be optimal, thereby helping improve overall performance of the data processing system.

In a possible implementation, when storing the plurality of transaction logs in the data buffer to the buffer, the second processor may specifically simultaneously write a plurality of transaction logs in each data buffer into the buffer, to obtain a plurality of aggregation logs, where each aggregation log includes a plurality of transaction logs in one data buffer; and the plurality of transaction logs in each data buffer are transaction logs of a same type, or the plurality of transaction logs in each data buffer are transaction logs of different types. In this way, batch processing is performed on the plurality of transaction logs in the data buffer, so that efficiency of writing the plurality of transaction logs into the buffer by the second processor can be improved.

In a possible implementation, when a log replay condition is met, the second processor may further split the aggregation log into a plurality of transaction logs, and replay the plurality of transaction logs obtained by splitting the aggregation log. In this way, the second processor may split and replay the transaction log in the aggregation log, so that data recovery on the data processing system can be implemented.

In a possible implementation, the second processor may further obtain a configuration result for a size of the aggregation log. The size of the aggregation log may be configured by an administrator, or may be automatically configured by the second processor. When simultaneously writing the plurality of transaction logs in each data buffer into the buffer, the second processor may specifically simultaneously write the plurality of transaction logs in each data buffer into the buffer based on the configuration result for the size of the aggregation log, to obtain a plurality of aggregation logs whose sizes meet the configuration result. In this way, the second processor may simultaneously write the plurality of transaction logs in each data buffer into the buffer based on the size of the aggregation log, so that efficiency of writing the transaction logs into the buffer can be improved, and the size of the aggregation log can be flexibly configured.

In a possible implementation, the second processor may further send, based on a remote direct memory access RDMA technology, the transaction log in the buffer to a backup node. The first processor, the storage device, and the second processor may form a first node in the data processing system. The data processing system further includes the backup node, and the backup node is used for redundancy of the first node. In this way, when the first node is faulty, the data processing system may implement data recovery by using the transaction log backed up on the backup node, thereby ensuring reliability of the data processing system.

According to a second aspect, this application provides a data processing method. The method is applied to a second processor in a data processing system, the data processing system further includes a first processor and a storage device, the first processor includes a plurality of threads, each thread corresponds to one data buffer, the first processor is configured to execute the plurality of threads, to separately write a plurality of transaction logs into a plurality of data buffers respectively corresponding to the plurality of threads, and the second processor includes a buffer; and the method includes: The second processor separately obtains the plurality of transaction logs from the plurality of data buffers; the second processor stores the plurality of transaction logs to the buffer; and the second processor persistently stores the plurality of transaction logs from the buffer to the storage device.

In a possible implementation, the second processor includes a smart network interface card or a data processing unit DPU.

In a possible implementation, that the second processor persistently stores the plurality of transaction logs from the buffer to the storage device includes: The second processor divides the plurality of transaction logs to obtain a plurality of log segments, where each log segment includes at least one transaction log; the second processor determines a plurality of first storage areas in the storage device; and the second processor writes the plurality of log segments into the plurality of first storage areas in parallel, where each first storage area is used to store one log segment.

In a possible implementation, the method further includes: The second processor determines a plurality of second storage areas in the storage device; and the second processor writes metadata separately corresponding to the plurality of log segments into the plurality of second storage areas in parallel, where each second storage area is used to store metadata corresponding to one log segment, and metadata corresponding to each log segment is used to describe a storage location of the log segment in the storage device.

In a possible implementation, after the first processor executes the plurality of threads to separately write the plurality of transaction logs into the plurality of data buffers, the plurality of threads are in a sleep state; and the method further includes: Before writing the plurality of log segments into the plurality of first storage areas in parallel, the second processor records log sequence numbers LSNs respectively corresponding to the plurality of threads; the second processor determines a target LSN, where the target LSN is a maximum LSN for continuously completing persistent storage of a transaction log; the second processor compares a size of an LSN corresponding to a first thread in the plurality of threads and a size of the target LSN; and the second processor wakes up the first thread when the LSN corresponding to the first thread is not greater than the target LSN.

In a possible implementation, a quantity of the plurality of log segments is consistent with a quantity of data write channels supported by the storage device.

In a possible implementation, that the second processor separately obtains the plurality of transaction logs from the plurality of data buffers, and the second processor stores the plurality of transaction logs to the buffer includes: The second processor simultaneously writes a plurality of transaction logs in each data buffer into the buffer, to obtain a plurality of aggregation logs, where each aggregation log includes a plurality of transaction logs in one data buffer; and the plurality of transaction logs in each data buffer are transaction logs of a same type, or the plurality of transaction logs in each data buffer are transaction logs of different types.

In a possible implementation, the method further includes: When a log replay condition is met, the second processor splits the aggregation log into a plurality of transaction logs; and the second processor replays the plurality of transaction logs obtained by splitting the aggregation log.

In a possible implementation, the method further includes: The second processor obtains a configuration result for a size of the aggregation log; and that the second processor simultaneously writes the plurality of transaction logs in each data buffer into the buffer includes: the second processor simultaneously writes the plurality of transaction logs in each data buffer into the buffer based on the configuration result for the size of the aggregation log, to obtain a plurality of aggregation logs whose sizes meet the configuration result.

In a possible implementation, the method further includes: The second processor sends, based on a remote direct memory access RDMA technology, the transaction log in the buffer to a backup node.

The data processing method provided in the second aspect corresponds to the data processing system provided in the first aspect. Therefore, for technical effect of the data processing method according to any one of the second aspect and the possible implementations of the second aspect, refer to the technical effect of the first aspect and the corresponding implementations of the first aspect. Details are not described herein again.

According to a third aspect, this application provides a computing device. The computing device includes a processor and a storage. The storage is configured to store instructions; and when the computing device runs, the processor executes the instructions stored in the storage, so that the computing device performs the method according to any one of the second aspect or the possible implementations of the second aspect. It should be noted that the storage may be integrated into the processor, or may be independent of the processor. The computing device may further include a bus. The processor is connected to the storage through the bus. The storage may include a readable memory and a random access memory.

According to a fourth aspect, this application provides a computer-readable storage medium. The computer-readable storage medium stores instructions; and when the instructions are run on a computing device, the computing device is enabled to perform the method according to any one of the second aspect or the implementations of the second aspect.

According to a fifth aspect, this application provides a computer program product including instructions. When the computer program product is run on a computing device, the computing device is enabled to perform the method according to any one of the second aspect or the implementations of the second aspect.

Based on the implementations provided in the foregoing aspects, this application may further combine technologies in this application to provide more implementations.

### BRIEF DESCRIPTION OF DRAWINGS

To describe technical solutions in embodiments of this application more clearly, the following briefly describes the accompanying drawings for describing embodiments. It is clear that the accompanying drawings in the following descriptions show merely some embodiments of this application, and a person of ordinary skill in the art may further derive other drawings from these accompanying drawings.
FIG. 1 is a diagram of a structure of an example data processing system according to this application;
FIG. 2 is a schematic flowchart of a data processing method according to this application;
FIG. 3 is a diagram in which a processor 103 writes a transaction log and metadata in parallel into a storage device 102;
FIG. 4 is a diagram of metadata and a transaction log that are recorded in a storage device 102;
FIG. 5 is a diagram of replaying a log based on a log type according to this application; and
FIG. 6 is a diagram of a structure of a computing device according to this application.

### DESCRIPTION OF EMBODIMENTS

In the specification, claims, and accompanying drawings of this application, the terms "first", "second", and the like are intended to distinguish between similar objects but do not necessarily indicate a specific order or sequence. It should be understood that the terms used in such a manner are interchangeable in proper circumstances, and this is merely a distinguishing manner used when objects with a same attribute are described in embodiments of this application.

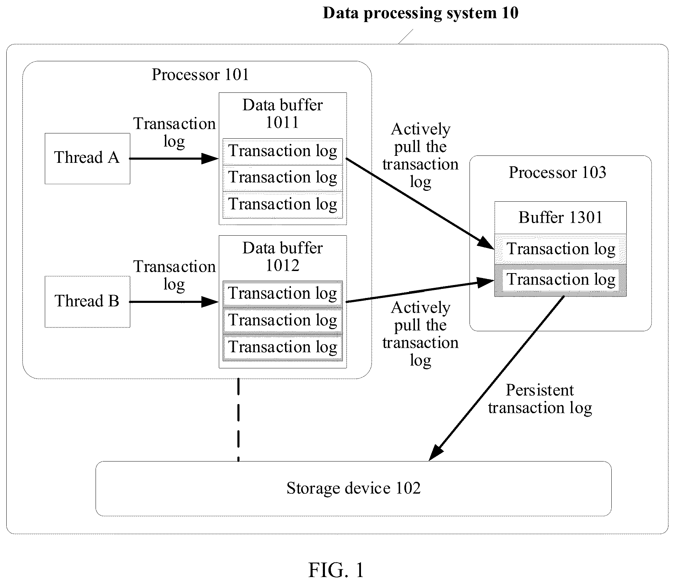

FIG. 1 is a diagram of a structure of a data processing system. As shown in FIG. 1, the data processing system 10 includes a processor 101, a storage device 102, and a processor 103, and the processor 101, the storage device 102, and the processor 103 may be connected through high-speed Internet.

The processor 101 may include a plurality of threads (threads), for example, a thread A and a thread B in FIG. 1, configured to execute one or more transactions. The transaction (transaction) is a program execution unit that accesses and possibly updates a data item in the data processing system 10. In a process of executing the plurality of threads to process the transactions, the processor 101 generates corresponding transaction logs, to record modifications made to data persistently stored in the data processing system 10. The processor 101 further includes a buffer. A storage area in the buffer may be divided into a plurality of data buffers, for example, a data buffer 1011 and a data buffer 1012 in FIG. 1. Each thread corresponds to one data buffer, and is configured to store a transaction log generated when the processor 101 executes the thread. Specifically, the data buffer 1011 may be configured to store a transaction log generated when the processor 101 executes the thread A, and the data buffer 1012 may be configured to store a transaction log generated when the processor 101 executes the thread B.

The storage device 102 may be any device that provides a persistent storage capability, for example, a solid state disk (solid state disk, SSD), a shingled magnetic recording (shingled magnetic recording, SMR) hard disk, a persistent memory (intel optane persistent memory, PMEM), a remote shared storage device, a disk array, or a cloud disk.

The processor 103 may be a device having a data processing capability, for example, a device such as a smart network interface card (smart network interface card, SmartNIC) or a data processing unit (Data processing unit, DPU), or may be a device of another type.

The data processing system 10 may provide a client externally. The client, for example, may be a network browser, or may be an application (application) running on a user terminal, and is configured to interact with a user, for example, receive a statement input by the user for modifying data, where the statement may be, for example, a structured query language (structured query language, SQL) statement. The processor 101 may create one or more transactions based on a statement input by the user, and allocate a corresponding thread to the transaction to process the transaction. Assuming that the processor 101 creates a transaction 1 and a transaction 2 based on a statement input by the user, allocates the thread A to process the transaction 1, and allocates the thread B to process the transaction 2.

In a process of executing the thread A and the thread B to process the transactions, the processor 101 generates one or more transaction logs. For example, when executing the thread A, the processor 101 may access an index (for example, a Btree index), to generate a transaction log used to record an operation such as adding, deleting, or replacing the index. Similarly, when executing the thread A, the processor 101 may access a database (database, DB) or access a heap (heap), so that a corresponding transaction log is also generated. A transaction log generated in a process in which the processor 101 executes each thread to process a transaction is written into a data buffer corresponding to the thread for buffering.

Usually, the transaction log in the data buffer needs to be persistently stored, to ensure reliability of storage in the data processing system 10. In this case, if the processor 101 persistently stores the transaction log in each data buffer, an insert thread needs to be disposed in the processor 101. In addition, after executing the thread A and the thread B to write transaction logs into the data buffer, the processor 101 contends for invoking the insert thread, to insert, by executing the insert thread, the transaction logs written into the data buffer into a buffer area (for example, a WAL buffer) that is separately configured in the processor 101, so that the processor 101 may subsequently write the transaction logs in the buffer area into the storage device 102 in a WAL form. Usually, after the processor 101 executes the insert thread to write all transaction logs in the data buffer into the separately configured buffer area, the thread A and the thread B enter a sleep state (for example, a semdown state), and the thread A and the thread B are woken up by the processor 101 after persistent storage of all the transaction logs in the buffer area is completed.

However, a process in which a plurality of threads configured to process transactions contend for invoking the insert thread in the processor 101 increases a delay of executing the threads by the processor 101 to process the transactions, and increases occupation of a computing resource of the processor 101, thereby affecting transaction processing performance of the data processing system 10. In addition, a large quantity of transaction log copies exist between different buffer areas of the processor 101, which imposes a limitation on a buffer resource and a computing resource of the processor 101. Therefore, the limitation on the resources of the processor 101 further affects performance of the data processing system 10.

In view of this, in the data processing system 10 provided in this application, the processor 103 is used to reduce resource occupation of the processor 101 in the transaction execution process, to improve performance of the data processing system 10. Specifically, a buffer is configured in the processor 103, and the buffer may be specifically the buffer 1031 in FIG. 1. Therefore, the processor 103 actively obtains a plurality of transaction logs in each data buffer, and writes the plurality of transaction logs into the buffer 1031. In addition, the processor 103 is further responsible for persistently storing the plurality of transaction logs stored in the buffer 1031 to the storage device 102.

Because the processor 103 can actively write the transaction logs in the plurality of data buffers into the buffer 1031 configured to generate WAL, in a process of executing the thread A and the thread B, the processor 101 does not need to contend for invoking an insert thread in the processor 101 (where the processor 101 may not need to create the insert thread either), so that a long delay of executing the thread A and the thread B by the processor 101 to process the transactions due to contention for invoking the insert thread can be avoided. Correspondingly, when executing the thread A and the thread B, the processor 101 can complete processing of the transactions in a shorter time period, which can effectively reduce occupation of computing resources in the processor 101 by these threads. In this way, performance of the data processing system 10 can be effectively improved. For example, efficiency of executing the transactions by the data processing system 10 can be improved, and execution of more transactions can be simultaneously supported.

In addition, copying and persistent storage of the transaction logs are completed by the processor 103, so that the processor 101 does not need to copy the transaction logs between different buffer areas, and does not need to execute a process of persistently storing the transaction logs, storage resources (specifically, buffer resources that need to be consumed) and computing resources that need to be consumed by the processor 101 in a process of executing the transactions can be effectively reduced, and performance of the data processing system 10 can be further improved.

During actual application, after completing persistent storage of the transaction log, the processor 103 may further wake up the thread A and the thread B that are in the sleep state, so that the thread A and the thread B continue to execute a next transaction, and the processor 101 does not need to wake up the thread A and the thread B. This can further reduce resource occupation of the processor 101 in a process of persistently storing the transaction log, so that performance of the data processing system 10 can be further improved.

Further, the data processing system 10 may include a plurality of nodes. The processor 101, the storage device 102, and the processor 103 may form a first node in the data processing system 10, and the data processing system 10 may further include a second node. The second node may serve as a backup node of the first node, that is, the first node may serve as a master node (master node), and the second node may serve as a slave node (slave node). The first node and the second node are interconnected through a network. In this case, when persistently storing the transaction log, the processor 103 not only writes the transaction log in the buffer 1031 into the storage device 102, but also sends the transaction log to the second node for persistent storage. For example, the processor 103 may remotely write the transaction log into a memory of the second node based on a remote direct memory access (remote direct memory access, RDMA) technology, so that the second node can persistently store the transaction log in the memory to the storage device included in the second node, and the like. The RDMA technology is a technology generated to resolve a data processing delay between a transmit end and a receive end in network transmission, and is mainly used to directly transmit data in the transmit end to a storage area of the receive end through the network. This eliminates a plurality of data replication operations in a transmission process without intervention of operating systems of the two ends, and reduces a load of processors in the transmit end and the receive end.

It should be noted that the data processing system 10 shown in FIG. 1 is merely used as an example for description, and is not intended to limit an implementation of the data processing system 10 to the example shown in FIG. 1. For example, in a Quorum scenario or a distributed consensus framework (distributed consensus framework, DCF) scenario, the data processing system 10 may include three or more nodes. One node is used as a master node, and remaining nodes are used as slave nodes. The master node includes the processor 101, the storage device 102, and the processor 103. Alternatively, the data processing system 10 may further include another type of device, to support the data processing system 10 having more functions. In addition, the processor 101 and the storage device 102 in the data processing system 10 may use a storage-compute integrated architecture, a storage-compute decoupled architecture, or the like. A specific architecture of the data processing system is not limited in this application.

For ease of understanding, the following describes in detail a process of processing a transaction log by the data processing system 10 with reference to the accompanying drawings.

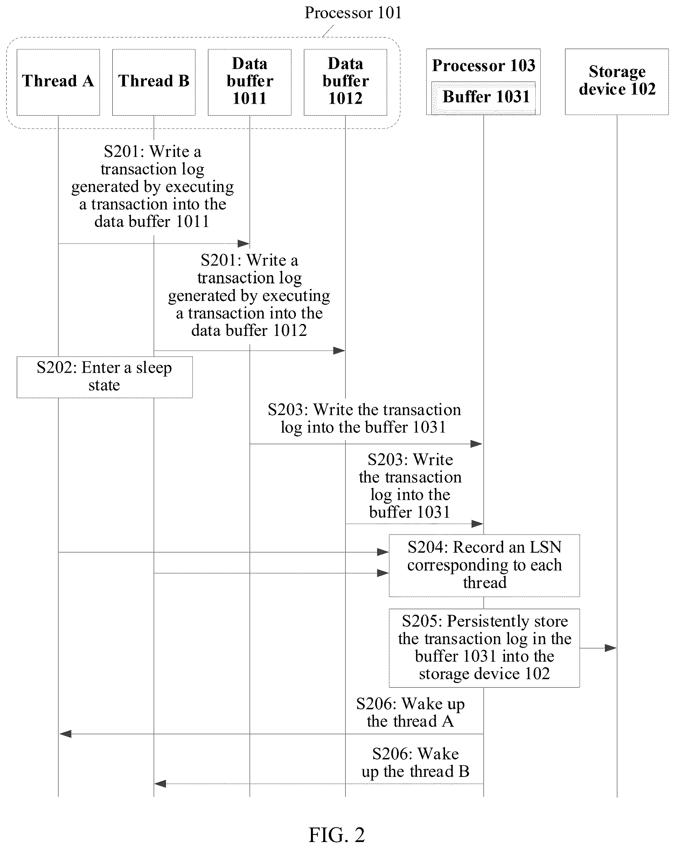

FIG. 2 is a schematic flowchart of a data processing method according to an embodiment of this application. The method may be applied to the data processing system 10 shown in FIG. 1, or may be applied to another applicable data processing system. For ease of understanding and description, an example in which the method is applied to the data processing system 10 shown in FIG. 1 is used below for description. As shown in FIG. 2, the method may specifically include the following steps.

S201: When executing a thread A and a thread B, a processor 101 writes transaction logs generated in a process of processing transactions into respective corresponding data buffers.

The thread A and the thread B may be created by the processor 101 based on statements provided by a user.

In an implementation example, the user may input an SQL statement (or another type of statement) through a client provided by the data processing system 10 externally, and the client sends the SQL statement to the processor 101. The processor 101 may generate a corresponding execution plan tree based on the received SQL statement, where the execution plan tree is used to describe an operation that needs to be executed by the processor 101 and a relationship between different operations. Then, the processor 101 may generate a plurality of corresponding transactions based on the execution plan tree, and create the thread A and the thread B for the plurality of transactions, where the thread A and the thread B are used to process the plurality of transactions. For ease of understanding and description, in this embodiment, an example in which the thread A is configured to process a transaction 1 in the plurality of transactions and the thread B is configured to process a transaction 2 in the plurality of transactions is used for description.

In addition, the processor 101 further allocates the data buffers shown in FIG. 1 to the thread A and the thread B. In this way, in a process of executing the thread A to process the transaction 1, the processor 101 generates one or more transaction logs. The transaction log may be used to record an operation executed in a process of accessing an index, a database, or a heap in the data processing system 10 when the processor 101 executes the thread A, and write the generated transaction log into a data buffer 1011 for storage. Similarly, when executing the thread B, the processor 101 writes, into a data buffer 1012 for storage, the transaction log generated in a process of processing the transaction 2. A plurality of transaction logs stored in each data buffer may be transaction logs of a same type, for example, are transaction logs used to record access to a database. Alternatively, the plurality of transaction logs stored in each data buffer may be transaction logs of different types, for example, may include a transaction log used to record an access index, a transaction log used to record access to a database, and the like.

S202: After the processor 101 executes the thread A and the thread B to complete writing of the transaction logs, the thread A and the thread B enter a sleep state.

Usually, in a process of executing a thread, after the processor 101 writes all generated transaction logs into a data buffer, the processor 101 starts to commit (commit) a transaction, and sets the thread to be in a sleep state, to wait for transaction commitment to end.

S203: A processor 103 separately obtains a plurality of transaction logs from a plurality of data buffers, and stores the plurality of transaction logs to a buffer 1031 in the processor 103.

In this embodiment, the buffer 1031 is configured in the processor 103, and the processor 103 may actively aggregate the transaction logs in the plurality of data buffers into the buffer 1031.

During specific implementation, the processor 103 may periodically scan each data buffer, and detect whether a transaction log is stored in each data buffer. If the transaction log in the data buffer does not exist, the processor 103 may not perform processing; or if the transaction log in the data buffer exists, the processor 103 may execute a process of writing the transaction log in the data buffer into the buffer 1031.

In a first implementation example, when it is detected that both the data buffer 1011 and the data buffer 1012 store transaction logs, the processor 103 may write the plurality of transaction logs in each data buffer into the buffer 1031 one by one.

In a second implementation example, when it is detected that both the data buffer 1011 and the data buffer 1012 store transaction logs, for each data buffer, the processor 103 may first aggregate the plurality of transaction logs in the data buffer, and simultaneously write the plurality of aggregated transaction logs into the buffer 1031, to form an aggregation log (or may be referred to as a transaction block log), the aggregation log includes content in a plurality of transaction logs in a same data buffer, and information such as a size of each transaction log can be recorded. In this way, the buffer 1031 may store a plurality of aggregation logs respectively corresponding to the plurality of data buffers.

For example, assuming that the data buffer 1011 stores a transaction log 1 to a transaction log 4, and the data buffer 1012 stores a transaction log 5 to a transaction log 7, the processor 103 may first aggregate the four transaction logs in the data buffer 1011 into an aggregation log 1, and write the aggregation log 1 into the buffer 1031. Then, the processor 103 aggregates the three transaction logs in the data buffer 1012 into an aggregation log 2, and writes the aggregation log 2 into the buffer 1031.

In this way, batch processing is performed on the plurality of transaction logs in the data buffer, so that efficiency of writing the plurality of transaction logs into the buffer 1031 by the processor 103 can be improved.

During actual application, a quantity of transaction logs stored in a part of data buffers is large. In this case, the processor 103 may aggregate a plurality of transaction logs in the data buffer into a plurality of aggregation logs, for example, aggregate 10 transaction logs into two aggregation logs, where each aggregation log includes content of five transaction logs.

A size of the aggregation log may be preconfigured by an administrator. For example, the administrator may preconfigure that the size of the aggregation log does not exceed 2 KB (kilobytes). Alternatively, the size of the aggregation log may be automatically configured by the processor 103. For example, the processor 103 may perform automatic configuration or the like based on a quantity of data write channels supported by the storage device 102. In this way, the processor 103 may write the plurality of transaction logs in each data buffer into the buffer 1031 in batches based on a configuration result for the size of the aggregation log, to obtain a plurality of aggregation logs whose sizes meet the configuration result.

In this case, the transaction log is still recorded in a buffer area, and persistent storage is not completed. As a result, the thread that generates the transaction log is still in the sleep state.

S204: The processor 103 records an LSN corresponding to each thread, where the LSN corresponding to each thread is a maximum value in LSNs respectively corresponding to a plurality of transaction logs generated when the processor 101 executes the thread.

During specific implementation, the processor 103 may determine the maximum value in the plurality of LSNs based on log sequence numbers (log sequence numbers, LSN) respectively corresponding to the plurality of transaction logs stored in the data buffer 1011, use the maximum value as an LSN corresponding to the thread A, and record the maximum value. Refer to a similar manner. The processor 103 may record an LSN corresponding to the thread B.

S205: The processor 103 persistently stores the plurality of transaction logs in the buffer 1031 to the storage device 102.

In this embodiment, the following two implementations of persistently storing the plurality of transaction logs are provided.

In a first implementation, the processor 103 may serially send the transaction logs to the storage device 102. During specific implementation, the processor 103 may create a write thread, and sequentially send transaction logs to the storage device 102 by using the write thread for persistent storage.

In a second implementation, the processor 103 may send the plurality of transaction logs to the storage device 102 in parallel.

During specific implementation, the processor 103 may create a dedicated thread and a plurality of write threads. The processor 103 may first execute the dedicated thread to divide the plurality of transaction logs in the buffer 1031 to obtain a plurality of log segments, where each log segment includes a plurality of transaction logs. A quantity of log segments may be consistent with a quantity of created write threads. Then, the processor 103 executes the dedicated thread to determine a plurality of first storage areas in the storage device 102, where each first storage area is used to store a plurality of transaction logs included in one log segment; and separately adds a lock to each first storage area, to lock occupation of the first storage area by each write thread. Finally, the processor 103 may simultaneously execute the plurality of write threads, to write the plurality of log segments into the plurality of first storage areas in the storage device 102 in parallel.

In this way, the processor 103 writes the plurality of transaction logs in the buffer 1031 into the storage device 102 in parallel, so that a persistent storage speed of the transaction logs can be accelerated, a transaction delay can be reduced, and transaction execution efficiency can be improved. In addition, the first storage areas used to store the transaction logs are locked for the write processes, so that a conflict generated when the transaction logs are concurrently written can be avoided, and concurrent flushing of the transaction logs to a disk can be supported.

For example, when the plurality of transaction logs generated by the thread are stored in the buffer 1031 in a form of an aggregation log, the processor 103 may use each aggregation log as one log segment, and execute the plurality of write threads to transmit the plurality of aggregation logs in parallel to the storage device 102 for persistent storage. In this case, the size of the aggregation log may be determined based on a quantity of data transmission channels between the processor 103 and the storage device 102. For example, when there are eight data write channels between the processor 103 and the storage device 102, a size of each aggregation log may be set to 2 KB; or when there are 16 data write channels between the processor 103 and the storage device 102, a size of each aggregation log may be set to 1 KB. In this way, based on bottom-layer input/output (input/output, IO) performance of the storage device 102, the size of the aggregation log may be flexibly configured, so that performance of writing the transaction logs into the storage device 102 in parallel by the processor 103 can be optimal, thereby helping improve overall performance of the data processing system 10.

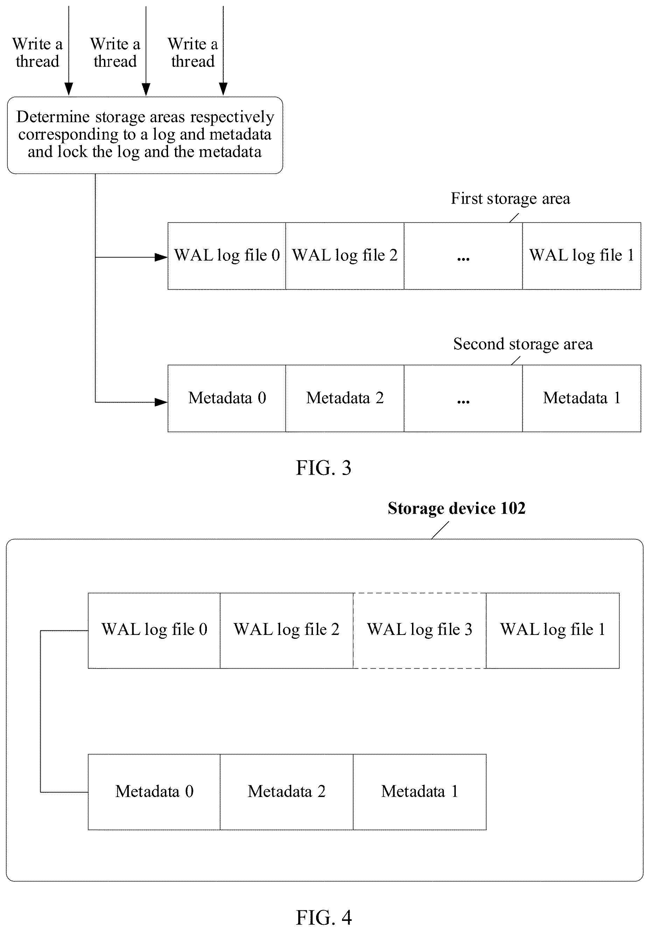

Further, in a process of writing the plurality of log segments into the storage device 102 in parallel, the processor 103 may further record, in the storage device 102, metadata separately corresponding to the written log segments. As shown in FIG. 3, before writing the plurality of log segments into the storage device 102, the processor 103 may first determine, by using the dedicated thread, the plurality of first storage areas and a plurality of second storage areas in the storage device 102. Each first storage area is used to store a plurality of transaction logs included in one log segment, and each second storage area is used to store metadata corresponding to each log segment. The metadata may describe, for example, a storage location of the log segment in the storage device 102, and may further describe information such as a size of the log segment, sizes respectively corresponding to the plurality of transaction logs included in the log segment, and an LSN. This is not limited in this embodiment.

Then, the processor 103 may separately add locks to the first storage areas and the second storage areas, to lock occupation of the first storage areas and the second storage areas by the write threads. The plurality of transaction logs included in the log segment may be stored in the first storage area in a file form. As shown in FIG. 3, each first storage area stores one WAL log file, and the WAL log file records content of the plurality of transaction logs.

Finally, the processor 103 may execute the plurality of write threads to write the plurality of log segments into the plurality of first storage areas in the storage device 102 in parallel, and write the metadata separately corresponding to the plurality of log segments into the plurality of second storage areas in the storage device 102 in parallel. Because a data volume of the metadata is usually small, for example, a data volume of a log segment may be 1 KB, and the data volume of the metadata may be only 16 bytes, a delay generated when the processor 103 writes the metadata into the storage device 102 may be basically ignored.

In this way, when data recovery needs to be performed based on the transaction log persistently stored in the storage device 102 (for example, a fault occurs and the storage device 102 is restarted), the data processing system 10 may check, by using the metadata recorded in the second storage area, whether there is a hole in the transaction log, that is, determine whether a part of transaction logs are missing. For example, the processor 103 in the data processing system 10 may detect, by detecting whether there is the metadata corresponding to the transaction log, whether the transaction log is missing. When it is determined that no transaction log is missing, the processor 103 may implement data recovery by replaying the transaction logs recorded in the plurality of first storage areas. When it is determined that the transaction log is missing (for example, the transaction log may be missing due to reasons such as a program error or a fault of the storage device 102), as shown in FIG. 4, the storage device 102 does not record metadata corresponding to a log file 3, the processor 103 may replay only a transaction log whose LSN is less than a minimum LSN in the WAL log file 3, a transaction log whose LSN is greater than or equal to the minimum LSN in the WAL log file 3 is invalid, and the minimum LSN is a minimum value in LSNs of a plurality of transaction logs included in the log file 3.

S206: The processor 103 wakes up the thread A and the thread B based on the recorded LSNs corresponding to the threads.

It may be understood that after persistent storage of the plurality of transaction logs corresponding to the thread A and the thread B is completed, commitment of the executed transaction is completed, and the transaction ends. Therefore, the processor 103 may wake up the thread A and the thread B that are in the sleep state, so that the processor 101 executes the thread A and the thread B to continue to process a next transaction.

For example, this embodiment provides the following several implementation examples of waking up the thread A and the thread B.

In a first implementation example, when the processor 103 sequentially writes, based on one write thread, the plurality of transaction logs in the buffer 1031 into the storage device 102, the processor 103 may continuously monitor LSNs of transaction logs written by the write thread, and compare the LSNs with pre-recorded LSNs corresponding to the threads. When the LSN of the written transaction log is greater than the LSN corresponding to the thread A, the processor 103 wakes up the thread A; otherwise, the thread A continues to be in the sleep state. When the LSN of the written transaction log is greater than the LSN corresponding to the thread B, the processor 103 wakes up the thread B; otherwise, the thread B continues to be in the sleep state.

In this way, an occasion for waking up a thread can be accurately determined by comparing an LSN corresponding to the thread with an LSN of a transaction log that has been persistently stored, so that each thread does not need to be woken up until persistent storage of all transaction logs is completed. In this way, this can effectively shorten sleep duration of a part of threads, avoid a waste of computing resources of the processor 101 because the part of threads are in a sleep state for a long time, and improve overall efficiency of executing the plurality of transactions by the processor 101 by using the threads, so that overall performance of the data processing system 10 can be improved. In addition, the processor 103 actively wakes up the thread A and the thread B in the processor 101, and the processor 101 does not need to consume a computing resource to determine whether to change a state of each thread, so that resource consumption of the processor 101 can be further reduced, and this helps further improve overall performance of the data processing system 10.

In a second implementation example, when the processor 103 writes the plurality of transaction logs in the buffer 1031 into the storage device 102 in parallel based on the plurality of write threads, in a process of executing the write threads, after writing the transaction logs into the first storage area, the processor 103 feeds back a notification indicating that the transaction logs are successfully stored to a dedicated thread in the processor 103, so that when executing the dedicated thread, the processor 103 may obtain storage states of the transaction logs based on notification messages fed back by the write threads. In this way, when executing the dedicated thread, the processor 103 may determine a target LSN based on storage states of the plurality of transaction logs, where the target LSN is a maximum LSN for continuously completing persistent storage of a transaction log. For example, assuming that the processor 103 needs to write 100 transaction logs buffered in the buffer 1031 into the storage device 102, and LSNs of the 100 transaction logs are respectively 1 to 100, in a process of writing the 100 transaction logs into the storage device 102 in parallel, when executing the dedicated thread, the processor 103 may determine, based on storage states of transaction logs fed back by a plurality of write threads, that persistent storage of transaction logs whose LSNs are 1 to 68, 75 to 85, 95, and 99 is completed, and storage of remaining transaction logs is not completed. In this case, the processor 103 may determine that a maximum LSN for continuously completing persistent storage of a transaction log is 68, that is, determine that the target LSN is 68.

Then, the processor 103 may execute the dedicated thread, to compare a size of an LSN corresponding to the thread A and a size of the target LSN. In addition, when the LSN corresponding to the thread A is not greater than the target LSN, the processor 103 may wake up the thread A by executing the dedicated thread; otherwise, the thread A continues to be in the sleep state. Similarly, when the LSN corresponding to the thread B is not greater than the target LSN, the processor 103 may wake up the thread B by executing the dedicated thread; otherwise, the thread B continues to be in the sleep state.

In this way, in a process of concurrently storing the plurality of transaction logs, the processor 103 can accurately locate an occasion for waking up a thread by comparing the LSN corresponding to the thread with the target LSN, so that sleep duration of a part of threads can be shortened, and overall efficiency of executing the plurality of transactions by the processor 101 by using the threads can be improved, thereby improving overall performance of the data processing system 10. In addition, the processor 103 actively wakes up the thread A and the thread B in the processor 101, so that resource consumption of the processor 101 can be further reduced, and this helps further improve overall performance of the data processing system 10. An actual test performed based on the database performance test standard TPC-C may determine that the processor 101 can save at least 30% computing resources, and a throughput of the data processing system 10 can be improved by more than 30%.

During actual application, when executing the dedicated thread, the processor 103 may further update a global variable LSN in the processor 101 by using a value of the target LSN, so that the processor 101 determines, based on the value of the global variable LSN, the LSN corresponding to the transaction log that has been persistently stored.

In addition to the foregoing implementation examples, the processor 103 may also wake up each thread based on another implementation. For example, after determining that persistent storage of all transaction logs in the buffer 1031 is completed, the processor 103 wakes up all threads in a unified manner. This is not limited in this embodiment.

In a further possible implementation, when the data processing system 10 meets a log replay condition, for example, the processor 101 is restarted after a fault occurs, the processor 103 (or the processor 101) may access the transaction log persistently stored in the storage device 102. For example, the processor 103 may determine storage addresses of the transaction logs in the storage device 102 based on the metadata recorded in the plurality of second storage areas in the storage device 102, so that the processor 103 can read the transaction logs in the plurality of first storage areas based on the storage addresses. Because a data volume of the metadata recorded in the second storage area is small, a delay generated when the processor 103 accesses the metadata to determine the storage location of the transaction log is very small and can be basically ignored (relative to a delay generated when the processor 103 accesses the transaction log).

Then, the processor 103 may implement data recovery by replaying the transaction log in the storage device 102.

When the processor 103 writes the transaction log into the storage device 102 in a form of an aggregated log, after obtaining a log in the storage device 102 through access, the processor 103 (or the processor 101) may first parse a type to which the log belongs, for example, may determine the type of the log by parsing a log header. When it is determined that the log is an aggregation log, the processor 103 may first split the aggregation log into a plurality of transaction logs, and replay the transaction logs one by one.

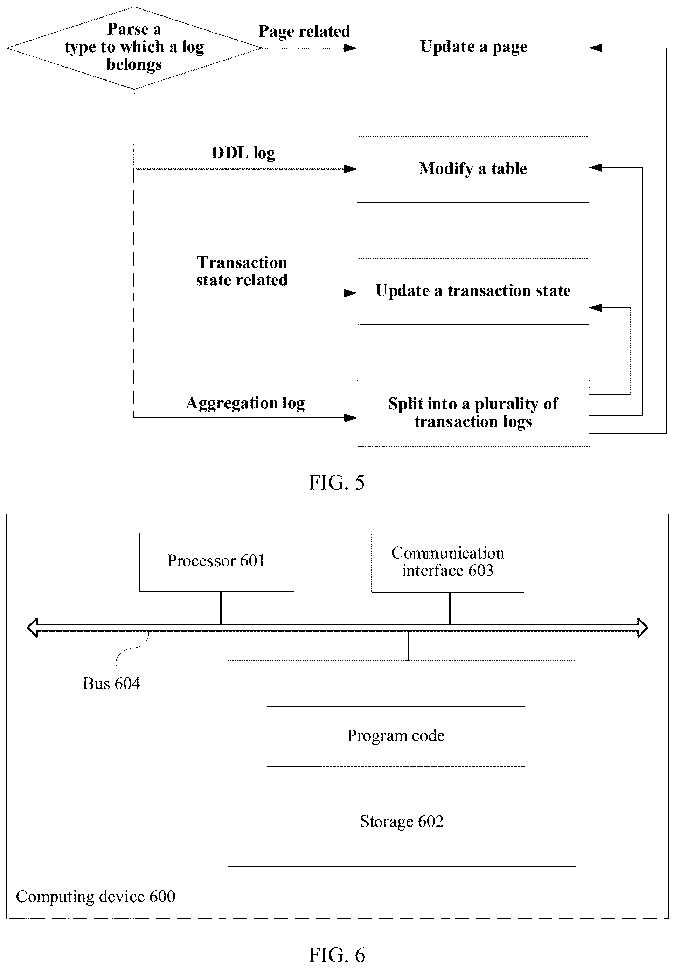

Specifically, as shown in FIG. 5, when operation content recorded in the transaction log is operation content related to a page (page), the processor 103 may allocate the operation content to a queue corresponding to a replay thread, and sequentially execute, by executing the replay thread, operations for one or more pages in the queue. When operation content recorded in the transaction log is operation content related to a table (table), the processor 103 may allocate, based on a table granularity, the operation content to a queue corresponding to a replay thread, and sequentially execute, by executing the replay thread, operations, in the queue, for pages corresponding to pieces of data in the table.

When the transaction log is a table modification log, for example, a data definition language (data definition language, DDL) log, the processor 103 may allocate operation content in the transaction log to queues corresponding to all replay threads, so that a daily transaction log is replayed by executing the replay threads based on a table modification operation recorded in the transaction log.

When the operation content recorded in the transaction log indicates that a transaction state is updated, the processor 103 may allocate the operation content to a transaction related queue, to update the transaction state by replaying the transaction log.

In this embodiment, because a specific implementation process of replaying the transaction log by the processor 103 has a related application in an actual application scenario, details are not described herein again.

As shown in FIG. 5, when it is determined, through parsing, that the type of the log is a single transaction log, the processor 103 may allocate, based on the operation content recorded in the transaction log, the operation content recorded in the transaction log to a corresponding queue for replay.

The foregoing process of replaying the transaction log is executed by the processor 103. In another possible implementation, the data processing system 10 may include a plurality of nodes, the processor 101, the storage device 102, and the processor 103 belong to a first node of the plurality of nodes, and another node in the plurality of nodes is used as a backup node of the first node. In this case, when the data processing system 10 meets the log replay condition, the backup node in the data processing system 10 may implement data recovery by replaying the transaction log.

For example, the data processing system 10 further includes a second node. When persistently storing the transaction log in the buffer 1031 to the storage device 102, the processor 103 further remotely sends the transaction log to the second node for persistent storage. For example, the processor 103 may remotely send the transaction log to a memory in the second node based on the RDMA technology, and then the second node persistently stores the transaction log in the memory. In this way, when the data processing system 10 meets the log replay condition, for example, the processor 101 in the first node is faulty, the second node may perform log replay based on the transaction log persistently stored in the second node, so that data stored in the second node is recovered to data stored before the first node is faulty, thereby implementing data recovery of the data processing system 10.

It should be noted that the data processing method shown in FIG. 2 is merely used as an example for description. During actual application, a specific implementation of persistent storage of the transaction log by the data processing system 10 is not limited to the foregoing examples, and may alternatively be implemented in another manner. In some examples, the following three points are listed in this embodiment to describe another possible implementation of persistent storage of the transaction log.
1. In another possible embodiment, a plurality of different users all may input SQL statements (or other types of statements) into the data processing system 10, and generate a plurality of different transactions in the data processing system 10. In this case, the thread A and the thread B may be respectively configured to process transactions corresponding to different SQL statements and generate transaction logs. In addition, there may be any quantity of threads included in the data processing system 10, and the threads are not limited to the thread A and the thread B.
2. In another possible embodiment, in a process in which the processor 101 executes the thread to write the plurality of transaction logs into the data buffer, the processor 103 may continuously and actively pull the transaction logs in the data buffer to the buffer 1031. During specific implementation, the processor 103 may continuously monitor whether there are transaction logs stored in data buffers corresponding to the threads. When the transaction logs are stored, the processor 103 directly writes all transaction logs currently stored in the data buffers into the buffer 1031. In this case, the processor 101 may still be in a phase of executing the thread to process the transaction and generate the transaction log, so that the processor 101 continues to execute the thread to write a new transaction log (which still belongs to a currently executed transaction) into the data buffer corresponding to the thread. Correspondingly, the processor 103 may detect, in a next monitoring periodicity, that a new transaction log is stored in the data buffer, and continue to actively write the new transaction log into the buffer 1031.
3. In another possible embodiment, after writing all the transaction logs in the data buffer into the buffer 1031, the processor 103 may not need to record LSNs corresponding to the threads. In addition, after the processor 103 sends all the transaction logs in the buffer 1031 to the storage device 102 for persistent storage, because all transaction logs generated by the thread A and the thread B are persistently stored, the processor 103 may directly wake up the thread A and the thread B, and may not determine, by comparing the LSN corresponding to the thread with the LSN of the transaction log that has been persistently stored, whether to wake up the thread.

The foregoing describes in detail the data processing method provided in this application with reference to FIG. 1 to FIG. 5. The following describes a computing device provided in this application with reference to FIG. 6.

FIG. 6 is a diagram of a structure of a computing device according to this application. As shown in FIG. 6, the computing device 600 includes a processor 601, a storage 602, a communication interface 603, and a bus 604. The processor 601, the storage 602, and the communication interface 603 communicate with each other through the bus 604. The bus 604 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one bold line represents the bus in FIG. 6, but this does not mean that there is only one bus or only one type of bus. The communication interface 603 is configured to communicate with the outside, for example, receive a job (and target data) committed by a user through a terminal or a client.

It should be understood that in this embodiment of this application, the processor 601 may be a CPU, or the processor 601 may be another general-purpose processor, a digital signal processor (DSP), an application-specific integrated circuit (ASIC), a field programmable gate array (FPGA), or another programmable logic device, a discrete gate or a transistor logic device, a discrete hardware component, or the like. The general-purpose processor may be a microprocessor, any conventional processor, or the like.

The storage 602 may include a read-only memory and a random access memory, and provide instructions and data to the processor 601. The storage 602 may further include a nonvolatile random access memory. For example, the storage 602 may further store information about a device type.

The storage 602 may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external buffer. By way of an example but not limitative descriptions, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The storage 602 stores executable code, and the processor 601 performs the method performed by the processor 103.

Specifically, when the embodiment shown in FIG. 2 is implemented, software or program code required for performing a function of the processor 103 in the embodiment shown in FIG. 2 is stored in the storage 602, and the processor 601 is configured to execute instructions in the storage 602, to implement the method performed by the processor 103.

It should be understood that the computing device 600 according to this embodiment of this application may correspond to the processor 103 in the methods shown in FIG. 2 in embodiments of this application, and the foregoing and other operations and/or functions implemented by the computing device 600 are respectively used to implement corresponding procedures of the methods in FIG. 2. For brevity, details are not described herein again.

In addition, an embodiment of this application further provides a computer-readable storage medium. The computer-readable storage medium stores instructions. When the instructions are run on a computing device, the computing device is enabled to perform the method performed by the processor 103 in the foregoing embodiment.

In addition, an embodiment of this application further provides a computer program product. When the computer program product is executed by a computing device, the one or more computing devices perform any method in the foregoing data processing methods. The computer program product may be a software installation package. When any method in the foregoing data processing methods needs to be used, the computer program product may be downloaded, and the computer program product may be executed on a computer.

In addition, it should be noted that the described apparatus embodiment is merely an example. The units described as separate parts may or may not be physically separate, and parts displayed as units may or may not be physical units, may be located in one location, or may be distributed on a plurality of network units. Some or all the modules may be selected based on actual needs to achieve the objectives of the solutions of embodiments. In addition, in the accompanying drawings of the apparatus embodiments provided in this application, connection relationships between modules indicate that the modules have communication connections with each other, which may be specifically implemented as one or more communications buses or signal cables.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, and this is merely a distinguishing manner used when objects with a same attribute are described in embodiments of this application.

Based on the descriptions of the foregoing implementations, a person skilled in the art may clearly understand that this application may be implemented by software in addition to necessary universal hardware, and certainly may be alternatively implemented by dedicated hardware, including a dedicated integrated circuit, a dedicated CPU, a dedicated memory, a dedicated component, and the like. Usually, any functions that can be performed by a computer program can be easily implemented by corresponding hardware. Moreover, a specific hardware structure used to achieve a same function may be in various forms, for example, in a form of an analog circuit, a digital circuit, or a dedicated circuit. However, in this application, a software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented by software, hardware, firmware, or any combination thereof. When software is used to implement embodiments, the foregoing embodiments may be implemented completely or partially in a form of a computer program product. The computer program product includes one or more computer instructions. When the computer program instructions are loaded or executed on a computer, all or some of the processes or the functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive (solid-state drive, SSD).

The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A data processing system, wherein the data processing system comprises a first processor, a storage device, and a second processor, the first processor comprises a plurality of threads, each thread corresponds to one data buffer, the first processor is configured to execute the plurality of threads, to separately write a plurality of transaction logs into a plurality of data buffers respectively corresponding to the plurality of threads, and the second processor comprises a buffer; and
the second processor is configured to: separately obtain the plurality of transaction logs from the plurality of data buffers, store the plurality of transaction logs to the buffer, and persistently store the plurality of transaction logs from the buffer to the storage device.

2. The data processing system according to claim 1, wherein the second processor comprises a smart network interface card or a data processing unit DPU.

3. The data processing system according to claim 1 or 2, wherein when persistently storing the plurality of transaction logs from the buffer to the storage device, the second processor is specifically configured to:
divide the plurality of transaction logs to obtain a plurality of log segments, wherein each log segment comprises at least one transaction log;
determining a plurality of first storage areas in the storage device; and
writing the plurality of log segments into the plurality of first storage areas in parallel, wherein each first storage area is used to store one log segment.

4. The data processing system according to claim 3, wherein the second processor is further configured to:
determine a plurality of second storage areas in the storage device; and
writing metadata separately corresponding to the plurality of log segments into the plurality of second storage areas in parallel, wherein each second storage area is used to store metadata corresponding to one log segment, and metadata corresponding to each log segment is used to describe a storage location of the log segment in the storage device.

5. The data processing system according to claim 3 or 4, wherein after the first processor executes the plurality of threads to separately write the plurality of transaction logs into the plurality of data buffers, the plurality of threads are in a sleep state; and
the second processor is further configured to:
before writing the plurality of log segments into the plurality of first storage areas in parallel, record log sequence numbers LSNs respectively corresponding to the plurality of threads;
determine a target LSN, wherein the target LSN is a maximum LSN for continuously completing persistent storage of a transaction log;
compare a size of an LSN corresponding to a first thread in the plurality of threads and a size of the target LSN; and
wake up the first thread when the LSN corresponding to the first thread is not greater than the target LSN.

6. The data processing system according to any one of claims 1 to 5, wherein a quantity of the plurality of log segments is consistent with a quantity of data write channels supported by the storage device.

7. The data processing system according to any one of claims 1 to 6, wherein when separately obtaining the plurality of transaction logs from the plurality of data buffers, and storing the plurality of transaction logs to the buffer, the second processor is specifically configured to:
simultaneously write a plurality of transaction logs in each data buffer into the buffer, to obtain a plurality of aggregation logs, wherein each aggregation log comprises a plurality of transaction logs in one data buffer; and
the plurality of transaction logs in each data buffer are transaction logs of a same type, or the plurality of transaction logs in each data buffer are transaction logs of different types.

8. The data processing system according to claim 7, wherein the second processor is further configured to:
when a log replay condition is met, split the aggregation log into a plurality of transaction logs, and replay the plurality of transaction logs obtained by splitting the aggregation log.

9. The data processing system according to claim 7 or 8, wherein the second processor is further configured to:
obtain a configuration result for a size of the aggregation log; and
when simultaneously writing the plurality of transaction logs in each data buffer into the buffer, the second processor is specifically configured to:
simultaneously write the plurality of transaction logs in each data buffer into the buffer based on the configuration result for the size of the aggregation log, to obtain a plurality of aggregation logs whose sizes meet the configuration result.

10. The data processing system according to any one of claims 1 to 9, wherein the second processor is further configured to:
send, based on a remote direct memory access RDMA technology, the transaction log in the buffer to a backup node.

11. A data processing method, wherein the method is applied to a second processor in a data processing system, the data processing system further comprises a first processor and a storage device, the first processor comprises a plurality of threads, each thread corresponds to one data buffer, the first processor is configured to execute the plurality of threads, to separately write a plurality of transaction logs into a plurality of data buffers respectively corresponding to the plurality of threads, and the second processor comprises a buffer; and the method comprises:
separately obtaining, by the second processor, the plurality of transaction logs from the plurality of data buffers;
storing, by the second processor, the plurality of transaction logs to the buffer; and
persistently storing, by the second processor, the plurality of transaction logs from the buffer to the storage device.

12. The method according to claim 11, wherein the second processor comprises a smart network interface card or a data processing unit DPU.

13. The method according to claim 11 or 12, wherein persistently storing, by the second processor, the plurality of transaction logs from the buffer to the storage device comprises:
dividing, by the second processor, the plurality of transaction logs to obtain a plurality of log segments, wherein each log segment comprises at least one transaction log;
determining, by the second processor, a plurality of first storage areas in the storage device; and
writing, by the second processor, the plurality of log segments into the plurality of first storage areas in parallel, wherein each first storage area is used to store one log segment.

14. The method according to claim 13, wherein the method further comprises:
determining, by the second processor, a plurality of second storage areas in the storage device; and
writing, by the second processor, metadata separately corresponding to the plurality of log segments into the plurality of second storage areas in parallel, wherein each second storage area is used to store metadata corresponding to one log segment, and metadata corresponding to each log segment is used to describe a storage location of the log segment in the storage device.

15. The method according to claim 13 or 14, wherein after the first processor executes the plurality of threads to separately write the plurality of transaction logs into the plurality of data buffers, the plurality of threads are in a sleep state; and the method further comprises:
before writing the plurality of log segments into the plurality of first storage areas in parallel, recording, by the second processor, log sequence numbers LSNs respectively corresponding to the plurality of threads;
determining, by the second processor, a target LSN, wherein the target LSN is a maximum LSN for continuously completing persistent storage of a transaction log;
comparing, by the second processor, a size of an LSN corresponding to a first thread in the plurality of threads and a size of the target LSN; and
waking up, by the second processor, the first thread when the LSN corresponding to the first thread is not greater than the target LSN.

16. The method according to any one of claims 11 to 15, wherein a quantity of the plurality of log segments is consistent with a quantity of data write channels supported by the storage device.

17. The method according to any one of claims 11 to 16, wherein separately obtaining, by the second processor, the plurality of transaction logs from the plurality of data buffers, and storing, by the second processor, the plurality of transaction logs to the buffer comprises:
simultaneously writing, by the second processor, a plurality of transaction logs in each data buffer into the buffer, to obtain a plurality of aggregation logs, wherein each aggregation log comprises a plurality of transaction logs in one data buffer; and
the plurality of transaction logs in each data buffer are transaction logs of a same type, or the plurality of transaction logs in each data buffer are transaction logs of different types.

18. The method according to claim 17, wherein the method further comprises:
when a log replay condition is met, splitting, by the second processor, the aggregation log into a plurality of transaction logs; and
replaying, by the second processor, the plurality of transaction logs obtained by splitting the aggregation log.

19. The method according to claim 17 or 18, wherein the method further comprises:
obtaining, by the second processor, a configuration result for a size of the aggregation log; and
simultaneously writing, by the second processor, the plurality of transaction logs in each data buffer into the buffer comprises:
simultaneously writing, by the second processor, the plurality of transaction logs in each data buffer into the buffer based on the configuration result for the size of the aggregation log, to obtain a plurality of aggregation logs whose sizes meet the configuration result.

20. The method according to any one of claims 11 to 19, wherein the method further comprises:
sending, by the second processor based on a remote direct memory access RDMA technology, the transaction log in the buffer to a backup node.

21. A computing device, wherein the computing device comprises a processor and a storage, the storage stores program instructions, and the processor runs the program instructions to perform the method according to any one of claims 11 to 20.

22. A computer-readable storage medium, wherein the computer-readable storage medium stores instructions; and when the instructions are run on a computing device, the computing device is enabled to perform the method according to any one of claims 11 to 20.

23. A computer program product comprising instructions, wherein when the computer program product is run on a computing device, the computing device is enabled to perform the method according to any one of claims 11 to 20.
